# EUROPÄISCHE PATENTANMELDUNG

(11) **EP 1 134 962 A1**
(43) Veröffentlichungstag der Anmeldung: **19.09.2001**
(21) Anmeldenummer: 00105245.5
(22) Anmeldetag: 14.03.2000
(51) Int. Cl.: H04M 17/00, H04Q 3/00

(54) **Verfahren zum Erfassen von Kosten in einem Kommunikationsnetz**

(71) Anmelder: SIEMENS AKTIENGESELLSCHAFT, 80333 München (DE)
(72) Erfinder: Erfurt, Frank, 14532 Kleinmachnow (DE); Seefeldt, Annett, 13629 Berlin (DE); Mauersberger, Eckhard, 12524 Berlin (DE)

(57) **Zusammenfassung**

Die Erfindung betrifft ein Verfahren zum Erfassem von Kosten in einem Kommunikationsnetz mit einem Netzknoten (Kontoknoten 4) zur Verwaltung mindestens eines als Guthabenkonto geführten Kontos eines Kommunikationsteilnehmers (1) und mit einem Netzknoten (Erfassungsknoten 3) zur Erfassung der auftretenden Kosten, bei dem ein Teil des Kontostandes als Kostenlimit vorgegeben wird, von dem Erfassungsknoten (3) die Höhe der während der Kommunikationsverbindung auftretenden Kosten mit dem Kostenlimit verglichen wird und eine Erreichungsnachricht (ACR) an den Kontoknoten gesendet wird, wenn die Kosten das Kostenlimit erreicht haben.

Um auch stark in ihrer Höhe sich unterscheidende Kosten erfassen zu können, werden Überschreitungsdaten gebildet, wenn die Kosten auf einer die Höhe des Kostenlimits überschreitenden Einzelforderung beruhen, und aufgrund dieser Überschreitungsdaten wird ein erhöhtes Kostenlimit ermittelt.

## Beschreibung

Die Erfindung betrifft ein Verfahren zum Erfassen von Kosten in einem Kommunikationsnetz mit einem Netzknoten (Kontoknoten) zur Verwaltung mindestens eines als Guthabenkonto geführten Kontos eines Kommunikationsteilnehmers und mit einem Netzknoten (Erfassungsknoten) zur Erfassung der auftretenden Kosten, bei dem bei Aufbau einer Kommunikationsverbindung durch den Kommunikationsteilnehmer von dem Kontoknoten dem Erfassungsknoten mittels einer Limitnachricht ein Teil des Kontostandes des Kontos als Kostenlimit vorgegeben wird, von dem Erfassungsknoten die Höhe der während der Kommunikationsverbindung auftretenden Kosten mit dem Kostenlimit verglichen wird und von dem Erfassungsknoten eine Erreichungsnachricht an den Kontoknoten gesendet wird, wenn die Kosten das Kostenlimit erreicht haben.

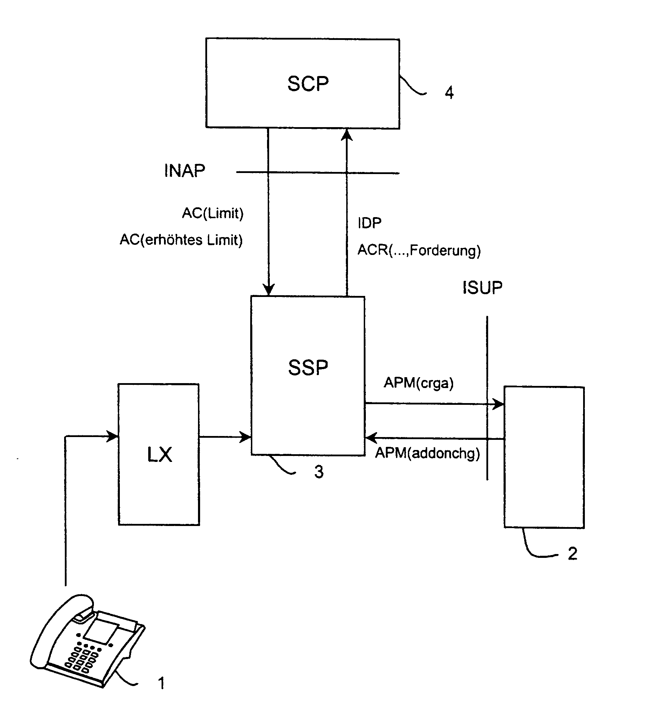

Ein derartiges Verfahren lässt sich der Veröffentlichung "DEN/SPAN-03063-1.2 V0.1.0 (2000-03-03), Intelligent Network (IN); Intelligent Network Application Protocol (INAP); Capability Set 3 (CS3); Part 1.2: Protocol specification, SCF - SSF Interface, Subpart F, Version: 28^{th}. February 2000" der Organisation ETSI, insbesondere der Figur 10 auf Seite 107 entnehmen. Hierbei dient ein Knoten SCP als Kontoknoten und ein Knoten SSP als Erfassungsknoten. Der Knoten SCP sendet dem Knoten SSP bei Aufbau der Kommunikationsverbindung mit einer Nachricht AC, welche als Limitnachricht dient, ein Kostenlimit zu. Die auftretenden Kosten werden dem Erfassungsknoten (dem Knoten SSP) in Form von Kostennachrichten mitgeteilt (in der Figur 10 der Veröffentlichung als "crgt" bezeichnet"); diese auftretenden Kosten werden ggf. durch den Knoten SSP aufsummiert. Der Knoten SSP vergleicht die Höhe der auftretenden Kosten mit dem Kostenlimit und sendet bei Erreichen des Kostenlimits als Erreichungsnachricht eine Nachricht ACR an den Knoten SCP zurück.

Der Erfindung liegt die Aufgabe zugrunde, das oben genannte Verfahren so weiterzuentwickeln, dass während der Kommunikationsverbindung auftretende, stark in ihrer Höhe sich unterscheidende Kosten erfasst werden können. Diese Aufgabe wird bei einem Verfahren der eingangs angegebenen Art erfindungsgemäß dadurch gelöst, dass Überschreitungsdaten gebildet werden, wenn die Kosten auf einer die Höhe des Kostenlimits überschreitenden Einzelforderung beruhen; mit der Erreichungsnachricht die Überschreitungsdaten übertragen werden und aufgrund dieser Überschreitungsdaten von dem Kontoknoten ein gegenüber dem Kostenlimit erhöhtes Kostenlimit ermittelt und dem Erfassungsknoten mit einer weiteren Limitnachricht mitgeteilt wird. Das erfindungsgemäße Verfahren ist bei Kommunikationsnetzen anwendbar, mit denen z.B. Sprache oder Daten oder Sprache und Daten übertragen werden können. Beispiele für solche Netze sind das Telefonnetz, das Internet oder ein mit dem Internet verbundenes Telefonnetz.

Bei dem erfindungsgemäßen Verfahren ist insbesondere vorteilhaft, dass auch sehr hohe auftretende Kosten, beispielsweise Einzelforderungen, die alleine bereits das Kostenlimit überschreiten, erfasst werden können. Unter einer Einzelforderung ist hierbei eine Nachricht an den Erfassungsknoten zu verstehen, welche diesen anweist, einen genau definierten Kostenbetrag zu registrieren und für sich mit dem Kostenlimit zu vergleichen. Einzelforderungen im Sinne der Erfindung können durchaus auch mehrfach nacheinander oder periodisch auftreten, werden jedoch jeweils für sich behandelt und führen auch für sich zur Bildung der Überschreibungsdaten, wenn sie jeweils für sich die Höhe des Kostenlimits überschreiten.

Eine besondere Ausgestaltungsform des erfindungsgemäßen Verfahrens sieht vor, dass mit dem Auftreten der Überschreitungsdaten die Höhe des erhöhten Kostenlimits auf die doppelte Höhe des Kostenlimits festgesetzt wird. Diese Ausgestaltungsform ermöglicht es dem Kontoknoten, auf eine besonders einfache Art und Weise die Höhe des erhöhten Kostenlimits zu ermitteln. Wenn das auf diese Weise ermittelte erhöhte Kostenlimit wieder nicht zur Bearbeitung der Einzelforderung ausreicht, so kann diese Information mit weiteren Überschreitungsdaten dem Kontoknoten mitgeteilt werden, welcher daraufhin die Höhe des Kostenlimits wiederum verdoppelt. Auf diese Art und Weise gelangt man nach ggf. mehrfachen Verdoppelungen zu einem erhöhten Kostenlimit ausreichender Höhe.

Das erfindungsgemäße Verfahren kann auch vorteilhafterweise derart ausgestaltet sein, dass mit den Überschreitungsdaten die Höhe der Einzelforderung übermittelt wird und von dem Kontoknoten das erhöhte Kostenlimit derart festgelegt wird, dass es mindestens so hoch ist wie die Einzelforderung. Hierbei ist insbesondere vorteilhaft, dass der Kontoknoten durch die Überschreitungsdaten von der Höhe der Einzelforderung informiert wird, so dass dieser sofort ein ausreichend großes erhöhtes Kostenlimit festlegen kann. Es tritt hierbei nicht der Fall auf, dass der Kontoknoten mehrfach das Kostenlimit erhöhen muss, bis die Bearbeitung der Einzelforderung möglich ist. Daher ist diese Ausgestaltungsform des erfindungsgemäßen Verfahrens besonders schnell.

Vorteilhafterweise kann das erfindungsgemäße Verfahren derart ausgestaltet sein, dass die Überschreitungsdaten als ein Teil eines Parameters der Nachricht "ApplyChargingReport" des Übertragungsprotokolls "Intelligent Network Application Protocol" übertragen werden.

Da, wie aus der eingangs erwähnten Veröffentlichung entnehmbar ist, die Nachricht "ApplyChargingReport" dazu verwendet werden kann, als Erreichungsnachricht von dem Erfassungsknoten an den Kontoknoten gesendet zu werden, ist es sinnvoll, die Überschreitungsdaten mittels eines erfindungsgemäß veränderten Parameters der Nachricht "ApplyChargingReport" an den Kontoknoten zu übertragen.

Zur weiteren Erläuterung des erfindungsgemäßen Verfahrens wird auf einem in der Figur schematisch dargestellten Teil eines Kommunikationsnetzes Bezug genommen.

Das dargestellte Kommunikationsnetz bietet einem Kommunikationsteilnehmer 1 die Möglichkeit, einen Dienst eines Dienstanbieters 2 zu nutzen. Dabei kann der Dienstanbieter 2 in demselben Kommunikationsnetz wie der Kommunikationsteilnehmer 1 angesiedelt sein, oder er kann sich in einem Fremd-Kommunikationsnetz befinden, welches mit dem Kommunikationsnetz des Kommunikationsteilnehmers 1 verbunden ist. Das von dem Kommunikationsteilnehmer 1 benutzte Kommunikationsnetz enthält als für das erfindungsgemäße Verfahren wesentliche Teile eine Vermittlungsstelle LX, ein Dienstevermittlungspunkt SSP (Service Switching Point) und ein Dienstesteuerpunkt SCP (Service Control Point). Damit weist dieses Kommunikationsnetz die Struktur eines Intelligenten Netzes (IN) auf. Derartige Intelligente Netze als solche sind beispielsweise in dem Buch "Technik der Netze" von Gerd Siegmund, 4. neubearbeitete und erweiterte Auflage, erschienen 1999 im Hüthig Verlag, Heidelberg, insb. im Kap. 6.4 "Intelligente Netze" beschrieben. Zur Kommunikation zwischen dem Dienstevermittlungspunkt SSP und dem Diensstesteuerpunkt SCP wird ein Kommunikationsprotokoll INAP (Intelligent Network Application Protocol) benutzt. Zur Kommunikation zwischen dem Dienstevermittlungspunkt SSP und dem Dienstanbieter 2 dient ein Kommunikationsprotokoll ISUP (ISDN User Part). Das Kommunikationsprotokoll INAP ist z.B. im ETSI-Standard EN 301 140-1 und das Kommunikationsprotokoll ISUP im ETSI-Standard ES 201 296 beschrieben.

Um einen Dienst des Dienstanbieters 2 zu nutzen, wählt der Kommunikationsteilnehmer 1 eine Telefonnummer des Dienstanbieters 2. Dadurch wird eine Verbindung zu der Vermittlungsstelle LX aufgebaut, welche die Verbindung zu dem Dienstevermittlungspunkt SSP weiter aufbaut. Der Dienstevermittlungspunkt SSP hat bei der Durchführung des erfindungsgemäßen Verfahrens die Funktion des Erfassungsknotens und wird daher nachstehend durchweg als "Erfassungsknoten 3" bezeichnet. Der Erfassungsknoten 3 erkennt aus der Art der Verbindung, dass der Kommunikationsteilnehmer 1 seine Kommunikationsverbindung über ein Guthabenkonto abrechnet und sendet eine Nachricht IDM (Initial Detection Point) an den Dienstesteuerpunkt SCP. Der Dienstesteuerpunkt SCP hat bei der Durchführung des erfindungsgemäßen Verfahrens die Funktion des Kontoknotens und wird daher nachstehend durchweg als "Kontoknoten 4" bezeichnet. Der Kontoknoten 4 liest daraufhin die Höhe des Guthabenkontos (z.B eines Kontos für den sog. Prepaid Card Service) des Kommunikationsteilnehmers 1 aus und sendet einen Teil des Kontostandes als ein Kostenlimit mit Hilfe der Nachricht AC(Limit) an den Erfassungsknoten 3. In diesem Fall beträgt die Höhe des Kostenlimits beispielsweise 10,- DM. Die Höhe dieses ersten Kostenlimits ist im Kontoknoten 4 für jeden Kommunikationsteilnehmer individuell gespeichert oder es gibt eine für alle Kommunikationsteilnehmer zunächst einmal gültige Höhe. Der Erfassungsknoten 3 kann nun aufgrund dieses zunächst ausreichenden Kostenlimits die Verbindung zu dem Dienstanbieter 2 herstellen. Wenn nun der Kommunkationsteilnehmer 1 einen Dienst des Dienstanbieters 2 nutzt, so können für diesen Dienst unter Umständen erhebliche Kosten auftreten. Dies kann beispielsweise der Fall sein, wenn der Dienstanbieter 2 Informationen bereitstellt, deren Nutzung er sich zeitabhängig oder pauschal bezahlen lässt (sog. Premium Rate Services; Content Vergebührung). Als anderes Beispiel kann der Dienstanbieter 2 am elektronischen Handel (E-Commerce) teilnehmen und dem Kommunkationsteilnehmer 1 beispielsweise Waren oder Dienstleistungen zum Kauf anbieten.

Über die beim Kauf entstehenden Kosten schickt nun der Dienstanbieter 2 eine Einzelforderung in Form einer Nachricht APM (addonchg) an den Erfassungsknoten 3. Die Abkürzung "addonchg" steht für "Add-on-Charge" und bezeichnet zusätzlich auftretende Kosten, hier z. B. für den Kauf im elektronischen Handel. APM (Application Transport Mechanism) ist ein Mechanismus zur Übertragung von Daten; eine APM-Nachricht kann als ein Container betrachtet werden, in dem die Einzelforderung über die Kosten an den Erfassungsknoten 3 transportiert wird. Der Mechanismus APM ist im Kommunikationsprotokoll ISUP definiert.

Die Höhe der Einzelforderung betrage in diesem Fall beispielsweise 100,- DM. Der Erfassungsknoten 3 vergleicht nun die Höhe der Einzelforderung, welche in diesem Fall die Kosten darstellt, mit der Höhe des ihm bekannten Kostenlimits (10,- DM) und stellt fest, dass die Einzelforderung höher ist als das Kostenlimit. Daraufhin bildet der Erfassungsknoten 3 Überschreitungsdaten, in denen die Information "Höhe des aktuellen Kostenlimits ist zu gering für eine Einzelforderung in Höhe von 100,- DM" enthalten ist. Der Erfassungsknoten 3 sendet diese Überschreitungsdaten mittels einer als Erreichungsnachricht dienenden Nachricht ACR(...,Forderung) an den Kontoknoten 4. Der Parameter "Forderung" der Erreichungsnachricht ACR enthält in diesem Fall die Überschreitungsdaten. Der Kontoknoten 4 bestimmt daraufhin mittels der Überschreitungsdaten die Höhe des erhöhten Limits derart, dass dieses erhöhte Limit höher ist als die Einzelforderung; beispielsweise legt er das erhöhte Limit auf 110,- DM fest und sendet es mittels einer weiteren Nachricht AC(erhöhtes Limit) an den Erfassungsknoten 3. Nun verfügt der Erfassungskonten 3 über ein Limit, welches größer ist als die Einzelforderung von 100,- DM; somit kann mit diesem Limit die Einzelforderung des Diensteanbieters 2 bearbeitet werden. Um dieses zu signalisieren, sendet der Erfassungsknoten 3 eine Bestätigungsnachricht APM(crga) (crga = Charging Acknowledgement Information) an den Diensteanbieter 2.

An dieser Stelle sei darauf hingewiesen, dass das in diesem Ausführungsbeispiel in DM geführte Guthabenkonto sowie die folglich ebenfalls in DM lautenden Kostenlimits und die in DM lautende Einzelforderung nur als Beispiel zu verstehen sind. Das Guthabenkonto, die Kostenlimits und die Einzelforderungen können beispielsweise auch in jeder anderen Geldwährung oder aber in Kosteneinheiten (beispielsweise Einheiten á 0,12 DM) geführt werden bzw. auftreten. Ebenso ist der im Ausführungsbeispiel als Erfassungsknoten eingesetzte SSP nur als ein Beispiel zu verstehen, es können als Erfassungsknoten ebenso z.B. ein GPRS-Knoten (GPRS = General Packet Radio Service), ein H.323-Gatekeeper/ Media Gateway Controller oder ein SIP-Proxy verwendet werden.

## Patentansprüche

1. Verfahren zum Erfassen von Kosten in einem Kommunikationsnetz mit einem
- Netzknoten (Kontoknoten 4) zur Verwaltung mindestens eines als Guthabenkonto geführten Kontos eines Kommunikationsteilnehmers (1) und mit einem
- einen Netzknoten (Erfassungsknoten 3) zur Erfassung der auftretenden Kosten, bei dem
- bei Aufbau einer Kommunikationsverbindung durch den Kommunikationsteilnehmer (1) von dem Kontoknoten (4) dem Erfassungsknoten (3) mittels einer Limitnachricht (AC(Limit)) ein Teil des Kontostandes des Kontos als Kostenlimit vorgegeben wird,
- von dem Erfassungsknoten (3) die Höhe der während der Kommunikationsverbindung auftretenden Kosten mit dem Kostenlimit verglichen wird und
- von dem Erfassungsknoten (3) eine Erreichungsnachricht (ACR) an den Kontoknoten gesendet wird, wenn die Kosten das Kostenlimit erreicht haben,
**dadurch gekennzeichnet**, dass
- Überschreitungsdaten gebildet werden, wenn die Kosten auf einer die Höhe des Kostenlimits überschreitenden Einzelforderung beruhen,
- mit der Erreichungsnachricht (ACR) die Überschreitungsdaten übertragen werden und
- aufgrund dieser Überschreitungsdaten von dem Kontoknoten (4) ein gegenüber dem Kostenlimit erhöhtes Kostenlimit ermittelt und dem Erfassungsknoten (3) mit einer weiteren Limitnachricht (AC (erhöhtes Limit)) mitgeteilt wird.

2. Verfahren nach Anspruch 1,
**dadurch gekennzeichnet**, dass
- mit dem Auftreten der Überschreitungsdaten die Höhe des erhöhten Kostenlimits auf die doppelte Höhe des Kostenlimits festgesetzt wird.

3. Verfahren nach Anspruch 1,
**dadurch gekennzeichnet**, dass
- mit den Überschreitungsdaten die Höhe der Einzelforderung übermittelt wird und
- von dem Kontoknoten das erhöhte Kostenlimit derart festgelegt wird, dass es mindestens so hoch ist wie die Einzelforderung.

4. Verfahren nach einem der Ansprüche 1 bis 3,
**dadurch gekennzeichnet**, dass
- die Überschreitungsdaten als ein Teil eines Parameters der Nachricht "ApplyChargingReport" des Übertragungsprotokolls "Intelligent Network Application Protocol" übertragen werden.
